# FASCICULE DE BREVET EUROPEEN

(11) **EP 4 169 232 B1**
(45) Date de publication et mention de la délivrance du brevet: **24.07.2024**
(21) Numéro de dépôt: 21740141.3
(22) Date de dépôt: 18.06.2021
(51) Int. Cl.: H04M 3/22, H04M 3/42, H04M 3/436, H04L 67/561

(54) **PROCÉDÉ ET DISPOSITIF D'ENRICHISSEMENT D'UN MESSAGE DE SIGNALISATION D'UNE COMMUNICATION**
VERFAHREN UND VORRICHTUNG ZUR ERGÄNZUNG EINER SIGNALISIERUNGS-KOMMUNIKATIONS-NACHRICHT
METHOD AND APPARATUS FOR ENHANCING A COMMUNICATION SIGNALLING MESSAGE

(30) Priorité: 23.06.2020 FR 2006549
(43) Date de publication de la demande: 26.04.2023
(73) Titulaire: Orange, 92130 Issy-les-Moulineaux (FR)
(72) Inventeur: BOUVET, Bertrand, 92326 Châtillon Cedex (FR)
(86) Numéro de dépôt international: PCT/FR2021/051112
(87) Numéro de publication internationale: WO 2021/260306

(56) Documents cités:
- EP-A1- 2 611 100
- WO-A1-2006/071935
- WO-A1-2017/212172
- US-A1- 2004 209 640

## Description

### 1. Domaine de l'invention

La demande d'invention se situe dans le domaine des télécommunications et de façon privilégiée mais non limitative au niveau des services de téléphonie et de visiophonie.

### 2. Art Antérieur

Les opérateurs de télécommunications proposent de nombreux services de gestion d'identité à leurs clients pour les aider dans leurs communications. Grâce à ces services, il est par exemple possible à un appelé de connaitre l'identité de l'appelant lors de l'établissement d'une communication (service CLIP pour Calling Line Identification Présentation ou OIP pour Originating Identification Présentation). Ce service peut être rendu dès lors que l'identité de l'appelant est bien reçue par le réseau de l'opérateur de l'appelé et que l'appelant n'a pas demandé le masquage de son identité via un service du type CLIR (Calling Line Identification Restriction) ou OIR (Originating Identification Restriction). Ces services peuvent également permettre la fourniture de l'identité de l'appelé au terminal appelant. En effet, dans la majorité des appels, le service COLP (COnnected Line Présentation) ou TIP (Terminating Identification Présentation) retourne au terminal appelant le numéro de téléphone de l'appelé composé par l'appelant. Mais lorsqu'un renvoi d'appel est appliqué dans le réseau de l'appelé, suite par exemple à une non-réponse ou un renvoi inconditionnel, l'appelant se retrouve alors en communication avec un numéro/terminal tiers ou bien la messagerie de l'appelé. Le service COLP/TIP peut alors afficher le numéro réellement joint en remplacement ou en complément du numéro saisi au niveau du terminal de l'appelant. Bien entendu, cela n'est possible que si l'appelé n'a pas souscrit à un service de type COLR (COnnected Line Restriction)/ TIR (Terminating Identification Restriction) permettant d'interdire la fourniture au terminal appelant du numéro réellement joint.

Un autre service fourni par les opérateurs est l'affichage du nom de l'appelant (CNIP pour Calling Name Identity Presentation). Ce service permet, lorsque le service d'affichage du numéro de l'appelant CLIP/OIP est souscrit et actif, et lorsque le numéro de l'appelant est disponible et non masqué, d'afficher à l'appelé le nom de l'appelant. Le service CNIP est particulièrement intéressant pour les entreprises/sociétés. En effet, la présentation de leur identité (nom/marque) plutôt qu'un simple numéro de téléphone qui n'est généralement pas connu de l'appelé, permet une communication plus efficace. Cependant, l'identité affichée à l'appelé peut comporter des informations erronées sans que l'entreprise/société concernée en ait conscience, ce qui peut lui nuire.

Les opérateurs de télécommunications peuvent également proposer des services téléphoniques spécifiques tel qu'un service de filtrage d'appel à leurs clients appelés et remplacer l'identité de l'appelant par une identité du service considéré comme par exemple un numéro de téléphone « technique ».

Tous ces services peuvent avoir pour conséquence la modification ou la suppression de l'identité appelante affichée sur le terminal de l'appelé lors de l'établissement d'une communication. L'identité ainsi modifiée peut par exemple engendrer le rejet des appels de la part de l'appelé sans que l'appelant en ait conscience. Cela peut être le cas lorsqu'un appelant utilise sans le savoir une ligne téléphonique avec le service CLIR/OIR activé ou lorsque le service CLIP/OIP souscrit par l'appelé ne fonctionne pas ou a été désactivé volontairement ou involontairement par l'appelé. L'appelé peut également filtrer les appels sur la base des informations complémentaires fournies par le service CNIP.

L'identité appelante affichée sur le terminal de l'appelé peut également être modifiée à la suite d'une mauvaise gestion de la communication par des équipements réseaux. En effet, l'identité appelante peut être perdue à la suite d'une mauvaise signalisation SIP (Session Initiation Protocol) ou ISUP (ISDN Signalling User Part), par exemple lorsque la signalisation d'appel est relayée par différents réseaux de transit. De plus, dans le cas d'un réseau de type SIP, le réseau de l'appelé affiche soit l'identité appelante non certifiée, c'est-à-dire déclarée au niveau du champ SIP FROM du message de signalisation SIP INVITE, soit l'identité appelante certifiée ajoutée par le réseau de l'appelant avec 2 contenus possibles, l'un au format SIP URI et l'autre au format TEL URI, chacun pouvant avoir des données différentes. Un example, dans l'art antérieur est document EP2611100.

Certains services règlementaires, comme les services d'urgence, peuvent également systématiquement afficher l'identité de l'appelant à l'appelé sans que l'appelant en ait conscience. De même, un utilisateur qui appelle un service à valeur ajoutée, comme par exemple un service Audiotel en France, n'a pas forcément conscience que son opérateur va systématiquement masquer son identité lors de l'appel.

Force est de constater que dans de nombreux cas, l'appelant n'a au final pas la connaissance de l'identité (son identité) réellement restituée sur le terminal de l'appelé.

### 3. Exposé de l'invention

L'invention vient améliorer l'état de la technique et propose à cet effet un procédé d'enrichissement, par un dispositif d'enrichissement d'un second réseau de télécommunications, d'un second message de signalisation d'une communication émis par un second terminal d'un second utilisateur du second réseau en réponse à un premier message de signalisation de la communication émis par un premier terminal d'un premier utilisateur d'un premier réseau de télécommunications, ce procédé étant caractérisé en ce qu'il comprend :
- une première étape d'obtention dudit second message de signalisation ;
- une deuxième étape d'obtention d'au moins une identité dudit premier utilisateur restituée par ledit second terminal audit second utilisateur ;
- une étape d'insertion dans ledit second message de signalisation par ledit dispositif dudit second réseau de ladite au moins une identité obtenue ;
- une étape d'émission dudit second message de signalisation à destination dudit premier terminal.

Avantageusement, selon l'invention, un tel procédé permet d'enrichir la signalisation d'une communication entre un utilisateur appelant et un utilisateur appelé avec une nouvelle information insérée par le dispositif d'enrichissement situé dans le réseau de télécommunications de l'utilisateur appelé, infalsifiable par un tiers au réseau de l'appelé et de l'appelant et véhiculée de manière transparente après son insertion jusqu'au réseau de l'utilisateur appelant, et destinée à être présentée à l'utilisateur appelant sur le terminal sur lequel il réalise la communication. Cette information est l'identité de l'appelant réellement présentée (affichée ou vocalisée) au niveau du terminal de l'appelé.

On entend par identité une suite de caractères et/ou de données binaires qui sert à identifier un utilisateur ou son terminal tel qu'un numéro de téléphone (MSISDN), une adresse de messagerie, une adresse postale, une adresse IP, une adresse MAC, un nom, un prénom, etc.

On entend par message de signalisation d'une communication, tout message permettant l'établissement de la communication ou la communication elle-même échangé entre au moins deux terminaux. Par ailleurs, aucune limitation n'est attachée à la nature de la communication entre le premier et le second terminal. Il peut s'agir d'un appel téléphonique ou visiophonique de type voix sur IP (VoIP pour Voice over IP) ou émis sur un réseau s'appuyant sur une technologie à commutation de circuits, d'une communication émise dans le cadre d'une messagerie instantanée ou d'une messagerie électronique, d'un SMS, etc.

Il convient de noter que le premier utilisateur (i.e. l'utilisateur appelant) et le second utilisateur (i.e. l'utilisateur appelé) peuvent appartenir au même réseau, autrement dit le premier et le second réseau peuvent être un unique et même réseau ou au contraire être des réseaux distincts, opérés par un même opérateur ou par des opérateurs différents.

Selon un mode de mise en oeuvre particulier de l'invention, un procédé tel que décrit ci-dessus est caractérisé en ce que ladite au moins une identité dudit premier utilisateur est obtenue depuis ledit premier message de signalisation.

Avantageusement ce mode de réalisation permet d'utiliser un message de signalisation déjà existant et échangé entre le premier et le second terminal pour véhiculer l'identité du premier utilisateur restituée par le second terminal. L'identité est par exemple mémorisée par le second dispositif lors de la réception du premier message de signalisation puis insérée dans le second message de signalisation.

Selon un mode de mise en oeuvre particulier de l'invention, un procédé tel que décrit ci-dessus est caractérisé en ce que ladite au moins une identité dudit premier utilisateur est obtenue depuis le second terminal.

Ce mode de réalisation permet d'obtenir depuis le second terminal, via par exemple une requête dédiée, l'identité du premier utilisateur restituée par le second terminal. En effet, le second terminal peut, sur réception du premier message de signalisation rechercher par exemple dans une liste de contacts stockés en local une correspondance avec une identité du premier utilisateur présente dans le premier message de signalisation et récupérer une identité associée qui sera restituée au second utilisateur par le second terminal.

Selon une variante, l'identité restituée peut également être renseignée par le second terminal dans un premier champ de signalisation du second message avant insertion par le dispositif d'enrichissement dans un second champ de signalisation du second message.

Selon un mode de mise en oeuvre particulier de l'invention, un procédé tel que décrit ci-dessus est caractérisé en ce que l'étape d'insertion est conditionnée par la valeur d'au moins un paramètre de service.

Ce mode de réalisation permet de conditionner, en fonction de la valeur d'un paramètre de service, l'insertion dans le second message de signalisation, par le second dispositif, de l'identité du premier utilisateur restituée par le second terminal. En effet, le second utilisateur peut ne pas souhaiter que le premier utilisateur obtienne l'identité restituée par le second terminal et avoir souscrit à une option auprès de son opérateur de télécommunications permettant que cette identité ne soit pas envoyée/fournie au premier utilisateur.

Ce mode de réalisation permet également de prendre en compte le cas où le paramètre de service est un paramètre qui indique que le premier réseau ou le premier terminal n'est pas adapté pour restituer l'identité restituée par le second terminal.

Selon une première variante de ce mode de mise en oeuvre particulier de l'invention, ledit au moins un paramètre est obtenu depuis un serveur situé dans ledit second réseau de télécommunications.

Ce mode de réalisation permet d'obtenir le paramètre de service depuis un serveur situé dans le second réseau comme par exemple un serveur hébergeant le profil du second utilisateur avec les options souscrites auprès de son opérateur de télécommunications.

Selon une seconde variante de ce mode de mise en oeuvre particulier de l'invention, ledit au moins un paramètre est obtenu depuis ledit second terminal.

Ce mode de réalisation permet d'obtenir le paramètre de service depuis le second terminal dans le cas où celui-ci donne la possibilité au second utilisateur via un paramètre de configuration d'accepter ou de refuser que le premier utilisateur obtienne l'identité restituée par le second terminal.

Selon une troisième variante de ce mode de mise en oeuvre particulier de l'invention, ledit au moins un paramètre est obtenu depuis ledit premier message de signalisation.

Ce mode de réalisation permet d'obtenir depuis le premier message de signalisation un paramètre de service qui indique par exemple que le premier réseau ou le premier terminal n'est pas adapté pour restituer l'identité restituée par le second terminal.

L'invention concerne également un dispositif d'enrichissement d'un second message de signalisation d'une communication émis par un second terminal d'un second utilisateur d'un second réseau de télécommunications en réponse à un premier message de signalisation de la communication émis par un premier terminal d'un premier utilisateur d'un premier réseau de télécommunications, ledit dispositif étant caractérisé en ce qu'il comprend :
- un premier module d'obtention dudit second message de signalisation ;
- un deuxième module d'obtention d'au moins une identité dudit premier utilisateur restituée par ledit second terminal audit second utilisateur ;
- un module d'insertion dans ledit second message de signalisation par ledit dispositif dudit second réseau de ladite au moins une identité obtenue ;
- un module d'émission dudit second message de signalisation à destination dudit premier terminal.

Le terme module peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en oeuvre une fonction ou un ensemble de fonctions telles que décrites pour les modules concernés. De la même manière, un composant matériel correspond à tout élément d'un ensemble matériel (ou hardware) apte à mettre en oeuvre une fonction ou un ensemble de fonctions pour le module concerné (circuit intégré, carte à puce, carte à mémoire, etc.).

L'invention concerne également un serveur comprenant un dispositif d'enrichissement tel que décrit ci-dessus.

L'invention concerne également un équipement passerelle comprenant un dispositif d'enrichissement tel que décrit ci-dessus.

L'invention concerne également un terminal comprenant un dispositif d'enrichissement tel que décrit ci-dessus.

L'invention concerne également un programme d'ordinateur comportant des instructions pour la mise en oeuvre du procédé ci-dessus selon l'un quelconque des modes particuliers de réalisation décrits précédemment, lorsque ledit programme est exécuté par un processeur. Le procédé peut être mis en oeuvre de diverses manières, notamment sous forme câblée ou sous forme logicielle. Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'enregistrement ou support d'informations lisible par un ordinateur, et comportant des instructions d'un programme d'ordinateur tel que mentionné ci-dessus. Les supports d'enregistrement mentionnés ci-avant peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur. D'autre part, les supports d'enregistrement peuvent correspondre à un support transmissible tel qu'un signal électrique ou optique, qui peut être acheminé via un câble électrique ou optique, par radio ou par d'autres moyens. Les programmes selon l'invention peuvent être en particulier téléchargés sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

Ce dispositif d'enrichissement et ce programme d'ordinateur présentent des caractéristiques et avantages analogues à ceux décrits précédemment en relation avec le procédé d'enrichissement.

### 4. Liste des figures

D'autres caractéristiques et avantages de l'invention apparaîtront plus clairement à la lecture de la description suivante de modes de réalisation particuliers, donnés à titre de simples exemples illustratifs et non limitatifs, et des dessins annexés, parmi lesquels :
[Fig 1] La figure 1 illustre un exemple d'environnement de mise en oeuvre selon un mode particulier de réalisation de l'invention,
[Fig 2] La figure 2 illustre l'architecture matérielle d'un dispositif configuré pour mettre en oeuvre le procédé d'enrichissement selon un mode particulier de réalisation de l'invention,
[Fig 3] La figure 3 illustre des étapes du procédé d'enrichissement d'un message de signalisation selon un mode particulier de réalisation de l'invention.

### 5. Description d'un mode de réalisation de l'invention

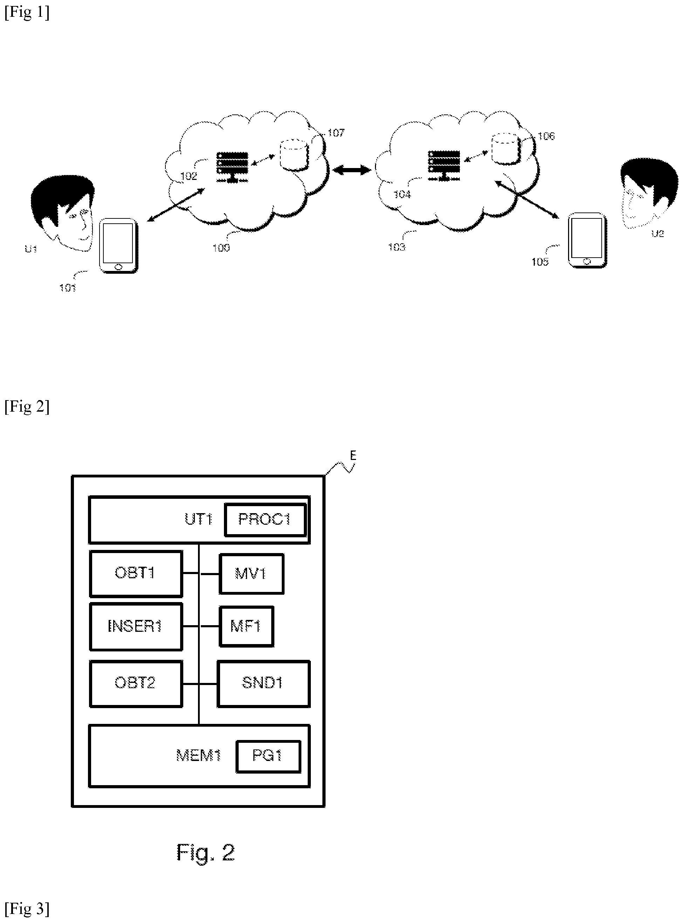

La figure 1 illustre un exemple d'environnement de mise en oeuvre de l'invention selon un mode particulier de réalisation de l'invention. L'environnement de mise en oeuvre comprend un premier terminal 101 d'un utilisateur U1 connecté à un réseau de télécommunications 100, adapté pour établir ou recevoir des communications avec un second terminal 105 d'un utilisateur U2 connecté à un réseau de télécommunications 103 selon l'état de l'art. Les terminaux 101 et 105 sont par exemple des terminaux mobiles, des terminaux fixes, des objets connectés, des assistants vocaux ou tout autre terminal apte à établir et recevoir des communications.

Les réseaux de télécommunications 100 et 103 sont respectivement opérés par les opérateurs de télécommunications des utilisateurs U1 et U2.

Les serveurs 102 et 104 sont des serveurs applicatifs respectivement situés dans les réseaux de télécommunications 100 et 103 aptes à relayer et prendre en charge une communication entre les terminaux 101 et 105. Le serveur 104 exécute le procédé d'enrichissement d'un message de signalisation.

Selon un mode particulier de réalisation de l'invention, l'environnement de mise en oeuvre peut comprendre également une base de données 106, par exemple située au sein du réseau de télécommunications 103, accessible depuis le serveur 104 et configurée pour stocker au moins un paramètre de service associé à une offre/option souscrite par l'appelant ou à une offre/option souscrite par l'appelé auprès de leur opérateur de télécommunications dont la valeur permet de déterminer si l'étape d'insertion du procédé d'enrichissement doit être réalisée. Le paramètre de service peut également être un paramètre indiquant que le réseau de l'opérateur appelant est apte à supporter ou non, par exemple à la suite d'un dysfonctionnement technique, une offre/option souscrite par l'appelant ou bien un service fourni par le réseau de l'opérateur de l'appelé à l'appelant.

Selon un mode particulier de réalisation de l'invention, l'environnement de mise en oeuvre comprend également une base de données 107, par exemple située au sein du réseau de télécommunications 100, accessible depuis le serveur 102 et configurée pour stocker au moins un paramètre de service associé à une offre/option souscrite par l'appelant auprès de son opérateur de télécommunications dont la valeur permet de déterminer si l'étape d'insertion du procédé d'enrichissement doit être réalisée.

A noter que l'environnement décrit à l'appui de la figure 1 est constitué de deux réseaux de télécommunications. Cependant, dans un mode particulier de réalisation de l'invention, les réseaux 100 et 103 peuvent être un seul et même réseau de télécommunications. En outre l'environnement peut comprendre plus de deux réseaux de télécommunication et comprendre par exemple un troisième réseau d'interconnexion permettant la communication entre les réseaux 100 et 103. Il convient par ailleurs de noter que la signalisation d'une communication est transportée de manière transparente (i.e. sans modification) entre le premier réseau et le second réseau en particulier, lorsqu'il est fait appel à des réseaux de d'interconnexion/de transit entre le premier réseau et le second réseau, ces réseaux véhiculent la signalisation de la communication depuis le premier réseau jusqu'au second réseau sans la modifier.

La figure 2 illustre l'architecture matérielle d'un dispositif E configuré pour mettre en oeuvre le procédé d'enrichissement selon un mode particulier de réalisation de l'invention.

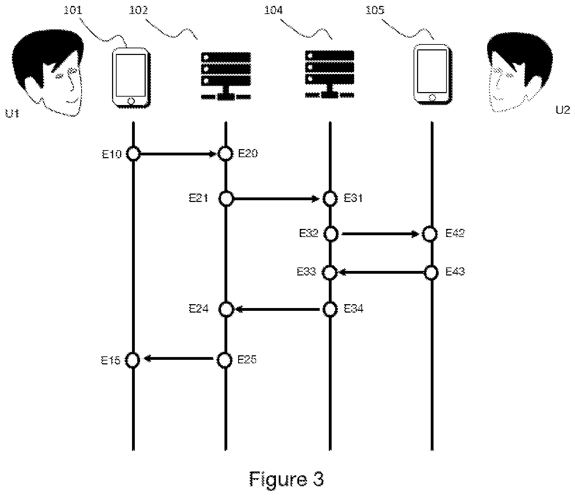

Dans le mode de réalisation décrit ici, ce dispositif a l'architecture matérielle d'un ordinateur. Il comprend notamment un processeur PROC1, une mémoire vive MV1, une mémoire morte MEM1 et une mémoire flash non volatile MF1. De tels moyens sont connus en soi et ne sont pas décrits plus en détail ici. La mémoire morte constitue un support d'enregistrement conforme à l'invention, lisible par le processeur PROC1 et sur lequel est enregistré ici un programme d'ordinateur PG1 conforme à l'invention, ce programme comportant des instructions pour mettre en oeuvre les étapes du procédé d'enrichissement tel que décrit précédemment, lorsque le programme est exécuté par le processeur PROC1. A l'initialisation, les instructions de code du programme d'ordinateur PG1 sont par exemple chargées dans une mémoire avant d'être exécutées par le processeur PROC1. Le processeur PROC1 de l'unité de traitement UT 1 met notamment en oeuvre les étapes du procédé d'enrichissement selon l'un quelconque des modes particuliers de réalisation décrits en relation avec les figures 1 et 3, selon les instructions du programme d'ordinateur PG1.

Le dispositif E comprend également un premier module d'obtention OBT1 apte à obtenir des messages de signalisation d'une communication via par exemple un réseau IP. Le module d'obtention OBT1 est par exemple utilisé pour obtenir des messages de signalisation d'une communication en provenance d'un terminal comme par exemple le terminal 105. Le dispositif E comprend en outre un module d'émission SND1 apte à émettre des messages de signalisation d'une communication via par exemple un réseau IP. Le module d'émission SND1 est par exemple utilisé pour émettre à destination d'un terminal tel que le terminal 101 les messages de signalisation obtenus via le module OBT1.

Le dispositif E comprend de plus un deuxième module d'obtention OBT2 apte à obtenir depuis par exemple un message de signalisation d'une communication établie entre l'utilisateur appelant du terminal 101 et l'utilisateur appelé du terminal 105 ou via un message en provenance du terminal 105, une identité de l'appelant restituée par le terminal 105 de l'appelé.

Le dispositif E comprend également un module INSER1 apte à insérer une identité de l'appelant obtenue via le module OBT2 dans un message de signalisation de la communication.

Selon un mode particulier de réalisation de l'invention, le dispositif E peut comprendre en outre un troisième module d'obtention (non représenté) apte à obtenir depuis par exemple un espace de stockage numérique tel qu'une mémoire interne ou une base de données, ou depuis un message de signalisation de la communication ou via une requête réseau un ou plusieurs paramètres de service. Le ou les paramètres de service sont par exemple des paramètres associés à une offre/option souscrite par l'appelant ou à une offre/option souscrite par l'appelé auprès de leur opérateur de télécommunications dont la valeur permet de déterminer si l'étape d'insertion du procédé d'enrichissement doit être réalisée.

La figure 3 illustre des étapes du procédé d'enrichissement d'un message de signalisation selon un mode particulier de réalisation de l'invention. La figure 3 utilise le même environnement que celui décrit à l'appui de la figure 1.

Au cours d'une première étape E10, l'utilisateur U1 va initier une communication avec l'utilisateur U2. Plus précisément, le terminal 101 de l'utilisateur U1 émet un message SIP INVITE à destination d'un identifiant de l'utilisateur U2. L'identifiant est par exemple un numéro de téléphone (MSISDN), une adresse de messagerie, ou tout autre identifiant permettant à U2 d'être joignable. Le message SIP INVITE envoyé par le terminal 101 à destination d'un identifiant de l'utilisateur U2 est, de façon connue, un message d'initiation d'une communication avec l'utilisateur U2. Une identité de l'utilisateur U1, dite identité non-certifiée, est incluse dans la signalisation d'appel, dans le champ FROM présent dans l'entête du message SIP INVITE. L'identité non-certifiée de l'utilisateur U1 est une identité déclarée par l'utilisateur et/ou le terminal 101 telle qu'un MSISDN, une adresse de messagerie, une adresse IP ou tout autre chaine de caractères et/ou de données binaires. On note que, de façon connue, les différentes informations placées dans les entêtes du message SIP INVITE appartiennent à ou encore constituent la signalisation de l'appel.

A noter que le protocole de signalisation utilisé pour initier puis établir la communication peut également être le protocole H.323, MGCP, ISUP (ISDN Signalling User Part), BICC (Bearer Indépendant Call Control), SIP-I (Session Initiation Protocol - ISUP), WebRTC (Web Real Time Communication) ou tout autre protocole de signalisation apte à initier / établir une communication. Dans la suite de la description les messages de signalisation échangés entre les terminaux 101 et 105 seront des messages SIP.

A l'étape E20, le message SIP INVITE est reçu puis pris en charge par le serveur 102 du réseau de télécommunication 100. Sur réception du message SIP INVITE, le serveur 102 peut positionner dans la signalisation du message, par exemple dans le champ SIP P-Asserted-Id une identité dite identité certifiée de l'appelant U1 et/ou modifier l'identité non certifiée déjà présente.

Par identité certifiée, on entend une identité qu'une entité de confiance (ex. opérateur du réseau ou autre autorité de confiance) établit et garantit. Cette identité certifiée peut par exemple être un MSISDN, une adresse de messagerie, un nom ou toute autre chaine de caractères et/ou de données binaires permettant d'identifier l'utilisateur U1.

A l'étape E20, le serveur 102 peut également modifier d'autres champs de la signalisation du message SIP INVITE comme par exemple le champ SIP PRIVACY dans le cas où l'appelant (U1) a souscrit auprès de son opérateur de télécommunication à un service du type OIR permettant le masquage de son identité lors d'une communication. De façon connue le champ SIP PRIVACY peut prendre plusieurs valeurs :
- « none » si le numéro de l'appelant n'est pas masqué à l'appelé ;
- « user » si le numéro de l'appelant non certifié doit être masqué à l'appelé ;
- « id » si le numéro de l'appelant certifié doit être masqué à l'appelé ;
- « headers » si toutes les informations pouvant fournir une identité de l'appelant (par exemple le numéro de téléphone peut être présent dans les champs SIP FROM, PAI, Via, AoC...) doivent être masqués à l'appelé.

Puis, lors de l'étape E21, le message SIP INVITE est envoyé à destination du serveur 104 situé au sein du réseau de télécommunications 103 de l'opérateur de télécommunications de l'utilisateur U2. Le message SIP INVITE est ensuite reçu par le serveur 104 à l'étape E31. Suite à la réception du message SIP INVITE, le serveur 104 peut, si l'utilisateur U2 a souscrit auprès de son opérateur de télécommunications à un service de type CNIP, que le service OIP est activé et que l'appelant n'a pas masqué son identité, consulter une base de données avec comme clef de recherche l'identité certifiée et / ou non certifiée de l'appelant contenue dans le message SIP INVITE pour obtenir une nouvelle identité, dite identité résolue, de l'appelant. Concrètement, la recherche dans la base de données est par exemple réalisée sur la base d'un MSISDN de l'appelant et l'identité résolue peut être le nom et/ou le prénom de l'appelant ou tout autre chaine de caractères. Cette identité résolue peut ensuite être insérée par le serveur 104 dans la signalisation du message SIP INVITE par exemple au niveau du paramètre SIP DISPLAY du champ FROM présent dans le message SIP INVITE. A l'étape E32, le serveur 104 transfère le message SIP INVITE au terminal 105. A noter que, juste avant l'envoi du message SIP INVITE, le serveur 104 peut mémoriser la ou les identités de l'appelant présentes dans la signalisation du message.

Sur réception (E42) du message SIP INVITE, le terminal va traiter le message et restituer, par exemple textuellement ou vocalement, une identité de l'appelant, c'est-à-dire une identité de l'utilisateur U1, à l'utilisateur U2. De manière connue et suite à ce qui a été décrit précédemment, le terminal peut restituer différentes identités selon sa configuration, la configuration du réseau de l'appelé (U2) et/ou des services souscrits par les utilisateurs U1 et U2 auprès de leur opérateur de télécommunications. Ainsi, le terminal 105 peut par exemple restituer une identité non-certifiée de l'appelant (U1) et/ou une identité certifiée de l'appelant (U1) présente dans le message SIP INVITE reçu. Le terminal peut aussi restituer à l'utilisateur U2 une identité résolue obtenue depuis la base de données du service CNIP mais aussi une identité vide, « anonyme » ou par défaut, comme par exemple une chaine de caractère prédéfinie, si le service OIP de l'appelé est désactivé, si l'identité de l'appelant présente dans le message SIP INVITE a été altérée par un équipement réseau ou encore si l'utilisateur U1 dispose du service OIR activé. L'identité présentée peut également être une identité dite « technique » comme une chaine de caractère telle qu'un préfixe ou un numéro de téléphone prédéfini, associée à un service de télécommunications, lorsque l'utilisateur U2 a souscrit par exemple à un service de filtrage des appels anonymes. L'identité technique permet alors à l'utilisateur U2 de savoir qu'il s'agit d'un appel entrant filtré et donc de traiter cet appel de manière spécifique.

A l'étape E43 le terminal 105 répond via un message SIP 180 Ringing. Le message est ensuite réceptionné par le serveur 104 à l'étape E33. Le serveur 104 peut, lors de l'étape E33, modifier la signalisation du message SIP 180 Ringing et y insérer une identité, par exemple certifiée et/ou non certifiée mémorisée lors de l'étape E32 et qui a été restituée à l'utilisateur U2 par le terminal 105 lors de l'étape E42. Cette information peut par exemple être insérée dans le paramètre SIP DISPLAY de l'identité appelante non certifiée présente dans le champ FROM ou bien dans le paramètre SIP DISPLAY de l'identité appelante certifiée du champ PAI ou bien encore dans un nouveau header SIP dédié. A noter que dans la plupart des cas le réseau de l'appelé « décide » quelle identité doit être restituée au niveau du terminal appelé. La signalisation d'appel entre le réseau appelé (serveur 104 et réseau 103) et terminal appelé (105) ne présente qu'un seul champ de signalisation pour transporter l'identité de l'appelant sélectionnée par le réseau appelé.

A noter que l'identité de l'appelant restituée par le terminal 105 à l'utilisateur U2 peut cependant être une identité présente dans un annuaire réseau ou une base de données située au niveau du terminal 105 tel qu'une liste de contacts ou un annuaire téléphonique. En effet, le terminal 105 peut sur réception du message SIP INVITE (E42) rechercher dans une liste de contacts stockés en local ou dans un annuaire réseau une correspondance avec une identité de l'appelant présente dans le message SIP INVITE et récupérer une identité associée. Concrètement, le terminal 105 peut par exemple via le MSISDN présent dans le champ FROM du message SIP INVITE rechercher dans sa liste de contacts le nom et/ou le prénom et/ou une chaîne de caractères associée au MSISDN.

Selon un mode particulier de réalisation, le serveur 104 peut également obtenir depuis le terminal 105 l'identité de l'appelant réellement restituée par le terminal 105 à l'utilisateur U2. Le serveur 104 peut par exemple obtenir depuis le terminal 105 l'identité de l'appelant réellement restituée via un message dédié utilisant le protocole SIP ou tout autre protocole de communication apte à établir une communication entre le terminal 105 et le serveur 104. Le serveur 104 peut également obtenir l'identité de l'appelant réellement restituée via le message SIP 180 Ringing reçu lors de l'étape E33. Cela suppose bien évidement que le terminal 105, lors de l'étape E43 a préalablement ajouté à la signalisation du message SIP 180 Ringing l'identité de l'appelant réellement restituée, par exemple dans le paramètre SIP DISPLAY de l'identité appelante non certifiée présente dans le champ FROM ou bien dans le paramètre SIP DISPLAY de l'identité appelante certifiée du champ PAI ou bien encore dans un nouveau header SIP dédié.

Selon un mode particulier de réalisation, le serveur 104 peut, en fonction d'un paramètre de service comme par exemple un statut d'activation (activé/non activé) associé à une option souscrite par l'utilisateur U2 auprès de son opérateur de télécommunications, ne pas insérer d'identité dans le message SIP 180 Ringing reçu à l'étape E33. En effet, l'utilisateur U2 peut ne pas souhaiter que l'appelant (U1) obtienne l'identité appelante restituée par son terminal (105) et avoir souscrit à une option auprès de son opérateur de télécommunications permettant que cette identité ne soit pas envoyée/fournie à l'appelant (U1). A noter que le serveur 104 peut obtenir le paramètre de service via une requête réseau ou depuis une base de données/fichier du serveur 104.

Alternativement ou cumulativement et selon une première variante de ce mode particulier de réalisation, le serveur 104 peut, obtenir le paramètre de service depuis le terminal 105. C'est par exemple le cas lorsque que l'utilisateur U2 déclare au niveau du terminal 105, via par exemple le positionnement d'un paramètre, ne pas souhaiter que l'appelant obtienne l'identité appelante restituée sur son terminal 105.

Alternativement ou cumulativement et selon une seconde variante de ce mode particulier de réalisation, le paramètre de service peut également être obtenu par le serveur 104 depuis un serveur situé dans le réseau 100. C'est par exemple le cas lorsque l'utilisateur U1 n'a pas souscrit auprès de son opérateur de télécommunications à un service permettant la restitution (vocalement ou textuellement) sur son terminal de son identité préalablement restituée sur le terminal de l'appelé ou lorsque le réseau 100 n'est pas apte à prendre en charge des messages de signalisation modifiée avec l'identité de l'appelant par exemple insérée dans un nouveau champ SIP. A noter que ce paramètre de service peut être récupéré via un message dédié ou bien depuis la signalisation du message SIP INVITE reçu par le serveur 104 à l'étape E31.

A l'étape E34 le serveur 104 va émettre le message de signalisation SIP 180 Ringing. Le message SIP 180 Ringing est ensuite reçu par le serveur 102 lors de l'étape E24 puis le serveur envoie le message lors de l'étape E25 à destination du terminal 101.

A l'étape E15 le terminal reçoit le message de signalisation SIP 180 Ringing et peut restituer à l'utilisateur U1, vocalement ou visuellement via une chaine de caractère sur un écran, l'identité appelante (c'est-à-dire l'identité de l'utilisateur U1) restituée par le terminal 105 à l'utilisateur U2 lors de l'étape E42.

Ainsi, l'utilisateur U1 aura la possibilité de connaitre son identité restituée par le terminal 105 auprès de l'utilisateur U2 qu'il souhaite joindre.

A noter que, dans le cas où l'identité de l'appelant est véhiculée dans un nouveau champ de signalisation du message SIP 180 Ringing, le terminal 101 est apte à exploiter et interpréter ce nouveau champ.

Selon un mode particulier de réalisation, l'exécution du procédé d'enrichissement peut être conditionnée par une donnée présente dans le message SIP INVITE. Cette donnée est par exemple insérée par le terminal 101 (E10) dans un champ de la signalisation du message SIP INVITE tel que l'entête SIP Supported pour indiquer au réseau 100 que le terminal 101 peut restituer à U1 l'identité de U1 restituée par le terminal 105 à U2 lors de l'établissement d'un appel. A l'étape E20, le serveur 102 peut modifier cette donnée et/ou en insérer une en fonction d'un paramètre de service ou des capacités du réseau 100 à supporter certaines fonctionnalités comme par exemple la possibilité de prendre en charge des messages de signalisation comprenant l'identité de l'appelant insérée par le procédé d'enrichissement lors de l'étape E33. Ainsi, lors de l'étape E31, le serveur 104 peut détecter la présence de la donnée dans le message SIP INIVITE et l'interpréter afin d'exécuter ou non le procédé d'enrichissement lors de l'étape E33.

Selon un mode particulier de réalisation, l'insertion de l'identité de l'appelant (E33) est réalisée uniquement dans un message de signalisation SIP 200 OK. Ce mode de réalisation permet de prendre en compte le cas où le message SIP INVITE est transmis par le réseau de l'appelé à plusieurs terminaux appartenant à l'appelé. Ainsi, seule la réponse finale SIP 200 OK, émise uniquement par le terminal de l'appelé qui prend l'appel, fournit à l'appelant l'identité de l'appelant qui a été restituée à l'appelé.

Selon un mode particulier de réalisation, l'insertion de l'identité de l'appelant (E33) peut être réalisée dans un message de signalisation SIP 200 OK et/ ou SIP 183 In Progress et/ou SIP 180 Ringing.

Selon un mode particulier de réalisation, le protocole de signalisation utilisé pour initier puis établir la communication peut également être le protocole H.323, MGCP, ISUP (ISDN Signalling User Part), BICC (Bearer Indépendant Call Control), SIP-I (Session Initiation Protocol - ISUP) ou WebRTC (Web Real Time Communication). Dans le cas du H323 le message de signalisation utilisé peut par exemple être le message SETUP. En ce qui concerne les protocoles ISUP et BICC le message de signalisation peut être le message IAM (Initiate Address Message). Le message utilisé par le protocole SIP-I peut quant à lui être une combinaison des messages utilisés par les protocoles SIP et ISUP. En effet, le protocole SIP-I encapsule le message IAM dans le message SIP INVITE. Pour le protocole MGCP le message de signalisation peut être le message Create Connexion et pour le WebRTC un message propriétaire. De même, les messages de signalisation correspondant au message SIP 180 Ringing peuvent être le message Alerting pour le protocole H323, le message ACM (Address Complete Message) ou CPG (Call ProGress) pour les protocoles ISUP ou BICC, le message Notification Command pour le protocole MGCP et un message propriétaire pour le protocole WebRTC

Selon un mode particulier de réalisation, le procédé d'enrichissement peut être exécuté par le terminal 105.

Selon un mode particulier de réalisation, le procédé d'enrichissement peut être exécuté par un équipement passerelle (non représenté) situé par exemple dans le réseau 103. On entend par équipement passerelle, un équipement intermédiaire assurant la redirection ou le routage des paquets de données entre les différents terminaux et réseaux qui lui sont connectés. L'équipement passerelle est par exemple une passerelle résidentielle qui permet de relier un réseau de communication local et un réseau étendu tel que le réseau Internet. Une telle passerelle résidentielle intègre notamment un serveur DHCP. Elle effectue le routage des paquets de données, et peut également jouer le rôle de pare-feu, de proxy, de relais DNS (pour l'anglais « Domain Name Server »), de fournisseur de services IGD (pour l'anglais « Internet Gateway Device », dispositif de passerelle Internet), etc. A titre d'exemple, une telle passerelle de service peut être un équipement connu en France sous le nom de « box », tel qu'un équipement LiveBox (produit commercialisé d'Orange, marque déposée).

Il va de soi que le mode de réalisation qui a été décrit ci-dessus a été donné à titre purement indicatif et nullement limitatif, et que de nombreuses modifications peuvent être facilement apportées par l'homme de l'art sans pour autant sortir du cadre de l'invention.

## Revendications

1. Procédé d'enrichissement, par un dispositif d'enrichissement d'un second réseau de télécommunications, d'un second message de signalisation d'une communication émis par un second terminal d'un second utilisateur du second réseau en réponse à un premier message de signalisation de la communication émis par un premier terminal d'un premier utilisateur d'un premier réseau de télécommunications, ce procédé étant **caractérisé en ce qu'**il comprend :
- une première étape d'obtention dudit second message de signalisation ;
- une deuxième étape d'obtention d'au moins une identité dudit premier utilisateur restituée par ledit second terminal audit second utilisateur ;
- une étape d'insertion dans ledit second message de signalisation par ledit dispositif dudit second réseau de ladite au moins une identité obtenue ;
- une étape d'émission dudit second message de signalisation à destination dudit premier terminal.

2. Procédé selon la revendication 1 **caractérisé en ce que** ladite au moins une identité dudit premier utilisateur est obtenue depuis ledit premier message de signalisation.

3. Procédé selon la revendication 1 **caractérisé en ce que** ladite au moins une identité dudit premier utilisateur est obtenue depuis le second terminal.

4. Procédé selon la revendication 1 **caractérisé en ce que** l'étape d'insertion est conditionnée par la valeur d'au moins un paramètre de service.

5. Procédé selon la revendication 4 **caractérisé en ce que** ledit au moins un paramètre est obtenu depuis un serveur situé dans ledit second réseau de télécommunications.

6. Procédé selon la revendication 4 **caractérisé en ce que** ledit au moins un paramètre est obtenu depuis ledit second terminal.

7. Procédé selon la revendication 4 **caractérisé en ce que** ledit au moins un paramètre est obtenu depuis ledit premier message de signalisation.

8. Dispositif d'enrichissement d'un second message de signalisation d'une communication émis par un second terminal d'un second utilisateur d'un second réseau de télécommunications en réponse à un premier message de signalisation de la communication émis par un premier terminal d'un premier utilisateur d'un premier réseau de télécommunications, ledit dispositif étant **caractérisé en ce qu'**il comprend :
- un premier module d'obtention dudit second message de signalisation ;
- un deuxième module d'obtention d'au moins une identité dudit premier utilisateur restituée sur ledit second terminal audit second utilisateur ;
- un module d'insertion dans ledit second message de signalisation par ledit dispositif dudit second réseau de ladite au moins une identité obtenue ;
- un module d'émission dudit second message de signalisation à destination dudit premier terminal.

9. Serveur comprenant un dispositif d'enrichissement selon la revendication 8.

10. Equipement passerelle comprenant un dispositif d'enrichissement selon la revendication 8.

11. Terminal comprenant un dispositif d'enrichissement selon la revendication 8.

12. Programme d'ordinateur comportant des instructions pour la mise en oeuvre du procédé d'enrichissement selon l'une quelconque des revendications 1 à 7 lorsque le programme est exécuté par un processeur.

## Patentansprüche

1. Verfahren zur Ergänzung, durch eine Vorrichtung zur Ergänzung eines zweiten Telekommunikationsnetzes, einer zweiten Signalisierungsnachricht einer Verbindung, die von einem zweiten Endgerät eines zweiten Nutzers des zweiten Netzes gesendet wird als Antwort auf eine erste Signalisierungsnachricht der Verbindung, die von einem ersten Endgerät eines ersten Nutzers eines ersten Telekommunikationsnetzes gesendet wird, wobei das Verfahren **dadurch gekennzeichnet ist, dass** es umfasst:
- einen ersten Schritt des Erhaltens der zweiten Signalisierungsnachricht;
- einen zweiten Schritt des Erhaltens mindestens einer Identität des ersten Nutzers, die von dem zweiten Endgerät an den zweiten Nutzer ausgegeben wird;
- einen Schritt des Einfügens der mindestens einen erhaltenen Identität durch die Vorrichtung des zweiten Netzes in die zweite Signalisierungsnachricht;
- einen Schritt des Sendens der zweiten Signalisierungsnachricht an das erste Endgerät.

2. Verfahren nach Anspruch 1, **dadurch gekennzeichnet, dass** die mindestens eine Identität des ersten Nutzers aus der ersten Signalisierungsnachricht erhalten wird.

3. Verfahren nach Anspruch 1, **dadurch gekennzeichnet, dass** die mindestens eine Identität des ersten Nutzers von dem zweiten Endgerät aus erhalten wird.

4. Verfahren nach Anspruch 1, **dadurch gekennzeichnet, dass** der Schritt des Einfügens durch den Wert mindestens eines Dienstparameters bedingt wird.

5. Verfahren nach Anspruch 4, **dadurch gekennzeichnet, dass** der mindestens eine Parameter von einem Server aus erhalten wird, der in dem zweiten Telekommunikationsnetz gelegen ist.

6. Verfahren nach Anspruch 4, **dadurch gekennzeichnet, dass** der mindestens eine Parameter von dem zweiten Endgerät aus erhalten wird.

7. Verfahren nach Anspruch 4, **dadurch gekennzeichnet, dass** der mindestens eine Parameter aus der ersten Signalisierungsnachricht erhalten wird.

8. Vorrichtung zur Ergänzung einer zweiten Signalisierungsnachricht einer Verbindung, die von einem zweiten Endgerät eines zweiten Nutzers eines zweiten Telekommunikationsnetzes gesendet wird als Antwort auf eine erste Signalisierungsnachricht der Verbindung, die von einem ersten Endgerät eines ersten Nutzers eines ersten Telekommunikationsnetzes gesendet wird, wobei die Vorrichtung **dadurch gekennzeichnet ist, dass** sie umfasst:
- ein erstes Modul zum Erhalten der zweiten Signalisierungsnachricht;
- ein zweites Modul zum Erhalten mindestens einer Identität des ersten Nutzers, die auf dem zweiten Endgerät an den zweiten Nutzer ausgegeben wird;
- ein Modul zum Einfügen der mindestens einen erhaltenen Identität durch die Vorrichtung des zweiten Netzes in die zweite Signalisierungsnachricht;
- ein Modul zum Senden der zweiten Signalisierungsnachricht an das erste Endgerät.

9. Server mit einer Vorrichtung zur Ergänzung nach Anspruch 8.

10. Gateway-Einrichtung mit einer Vorrichtung zur Ergänzung nach Anspruch 8.

11. Endgerät mit einer Vorrichtung zur Ergänzung nach Anspruch 8.

12. Computerprogramm, das Anweisungen umfasst, die bei der Ausführung des Programms durch einen Prozessor das Verfahren zur Ergänzung nach einem der Ansprüche 1 bis 7 ausführen.

## Claims

1. Method, carried out by an enrichment device of a second telecommunications network, for enriching a second signalling message of a communication transmitted by a second terminal of a second user of the second network in response to a first signalling message of the communication transmitted by a first terminal of a first user of a first telecommunications network, this method being **characterized in that** it comprises:
- a first step of obtaining said second signalling message;
- a second step of obtaining at least one identity of said first user rendered by said second terminal to said second user;
- a step, carried out by said device of said second network, of inserting said at least one obtained identity into said second signalling message;
- a step of transmitting said second signalling message to said first terminal.

2. Method according to Claim 1, **characterized in that** said at least one identity of said first user is obtained from said first signalling message.

3. Method according to Claim 1, **characterized in that** said at least one identity of said first user is obtained from the second terminal.

4. Method according to Claim 1, **characterized in that** the insertion step is conditional upon the value of at least one service parameter.

5. Method according to Claim 4, **characterized in that** said at least one parameter is obtained from a server located in said second telecommunications network.

6. Method according to Claim 4, **characterized in that** said at least one parameter is obtained from said second terminal.

7. Method according to Claim 4, **characterized in that** said at least one parameter is obtained from said first signalling message.

8. Enrichment device for enriching a second signalling message of a communication transmitted by a second terminal of a second user of a second telecommunications network in response to a first signalling message of the communication transmitted by a first terminal of a first user of a first telecommunications network, said device being **characterized in that** it comprises:
- a first module for obtaining said second signalling message;
- a second module for obtaining at least one identity of said first user rendered on said second terminal to said second user;
- a module allowing said device of said second network to insert said at least one obtained identity into said second signalling message;
- a module for transmitting said second signalling message to said first terminal.

9. Server comprising an enrichment device according to Claim 8.

10. Gateway equipment comprising an enrichment device according to Claim 8.

11. Terminal comprising an enrichment device according to Claim 8.

12. Computer program comprising instructions for implementing the enrichment method according to any one of Claims 1 to 7 when the program is executed by a processor.
